## Europäisches Patentamt
## European Patent Office
## Office européen des brevets

(19)

(11) Publication number: **0 070 251**
**B1**

(12) **EUROPEAN PATENT SPECIFICATION**

(45) Date of publication of patent specification: **23.07.86**

(51) Int. Cl.⁴: **B 23 Q 39/04, B 23 Q 5/34, B 23 Q 37/00**

(21) Application number: **82810274.9**

(22) Date of filing: **25.06.82**

(54) **Revolving table for an automatic machine with a plurality of stations each having a pair of upper and lower operating units.**

(30) Priority: **09.07.81 CH 4524/81**

(43) Date of publication of application:
**19.01.83 Bulletin 83/03**

(45) Publication of the grant of the patent:
**23.07.86 Bulletin 86/30**

(84) Designated Contracting States:
**AT BE DE FR GB IT LU NL SE**

(56) References cited:
**EP-A-0 002 527**
**DE-A-2 706 506**
**DE-A-2 827 480**
**DE-B-1 777 269**
**FR-A-2 076 273**
**FR-A-2 338 905**
**FR-A-2 448 961**
**US-A-2 837 935**
**US-A-2 963 922**
**US-A-3 754 316**

(73) Proprietor: **Azypatent AG**
**FL-9490 Vaduz (LI)**

(72) Inventor: **Mandozzi, Aldo, Dr.**
**CH-6951 Ponte Capriasca (CH)**

(74) Representative: **Baggiolini, Raimondo et al Racheli & Fiammenghi Via San Gottardo 15 CH-6900 Lugano (CH)**

Courier Press, Leamington Spa, England.

## Description

The present invention relates to a revolving table apparatus for an automatic machine with a plurality of stations each having a pair of upper and lower operating units.

A revolving table apparatus for an automatic machine with a plurality of stations each having a pair of upper and lower operating units is known from DE—A—2 706 506. The known apparatus comprises:

— a plurality of toothed wheels, arranged around the revolving table, one toothed wheel for each station;

— a toothed chain, or the like, engaging all of said toothed wheels so as to drive them simultaneously and in synchronism through a coupling from at least one motor;

— each toothed wheel being in driving relationship with a mechanism for direct transmission of feed movements to the operating units;

— the mechanism comprising an upper shaft which drives through speed reduction members an upper cam, an upper cam follower roller, carried by an upper lever which acts upon the upper operating unit of said station to impart to it a feed movement

— and a lower shaft which drives through speed reduction members a lower cam, a lower cam follower roller, carried by a lower lever acting upon the lower operating unit of that same station, to impart to it a feed movement.

The object of the invention is to reach a perfect synchronism between the upper and lower work operations, to increase the working speed and to allow for working with tolerances of only a few microns.

The revolving table according to the present invention is therefore characterised in that the upper and lower shafts are aligned and that the parts of the mechanism driven respectively by the upper and lower shafts are located symmetrically with respect to the plane of the revolving table.

For greater clarification, the attached drawings respresent a preferred but non-restrictive form of the revolving table according to this invention.

Figure 1 shows it in an axial cross-section in conjunction with a working station.

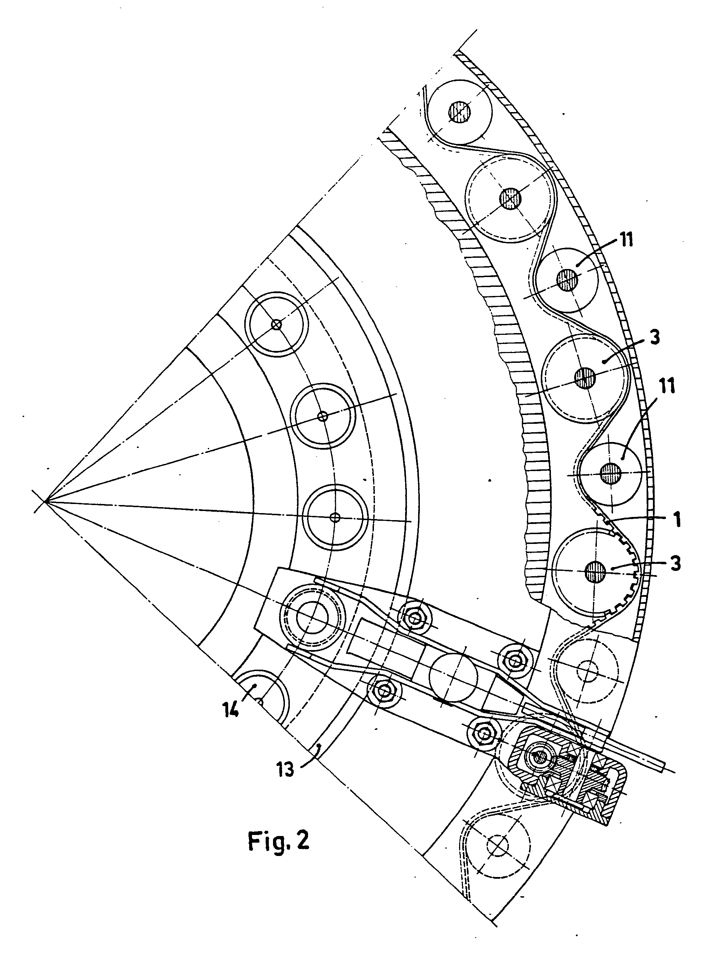

Figure 2 is a partial view of the horizontal cross-section along the horizontal plane passing through the various toothed wheels.

With reference to the two figures:

The table comprises a plurality of toothed wheels 3, arranged around the periphery of revolving table 13, that is to say, between the annular groove 16 on the underside of support 2 of revolving table 13.

For each working station on revolving table 13, that is to say, for each work operating, there is provided a toothed wheel 3 which controls the upper operating unit 9 and the corresponding lower coaxial operating unit 9'.

The various toothed wheels 3 are actuated simultaneously and therefore in synchronism with each other by the toothed belt or the toothed chain 1, through motor 12 and coupling 15.

Each toothed wheel 3 controls the following: the upper shaft 4 and, through speed translation members, for example, a worm 6 and the worm wheel 7, the upper cam 8, the upper roller 5, the upper levers 10 and 18, so as to act upon the upper operating unit 9.

Toothed wheel 3 simultaneously controls also the lower shaft 4', the worm 6', the worm wheel 7', the lower cam 8', the lower needle roller 5', the lower levers 10' and 18' so as to act upon the lower operating unit 9' of the same station.

The two operating units 9 and 9' normally comprise two coaxial mandrels, bearing the respective tool, each actuated by its own motor.

The toothed belt or toothed chain 1 extends from the idling sprockets 11, arranged between one toothed wheel and the adjacent one, so as to increase the contact angle of the belt or chain with respect to the toothed wheel to obtain maximum traction.

Provision has been made that—according to the number of operating units 9, 9' and the power required—the toothed belt or chain 1 may be capable of being driven by several motors, always through couplings 15 acting upon the toothed wheels 3.

The motors 12 can also be of the asynchronous type, synchronized with each other by the toothed belt or toothed chain 1.

From motor 12, which drives the belt 1, one can—through a reducer having the same reduction as the worms 6, 6' and the worm wheels 7, 7'—also control the rotatable table 13.

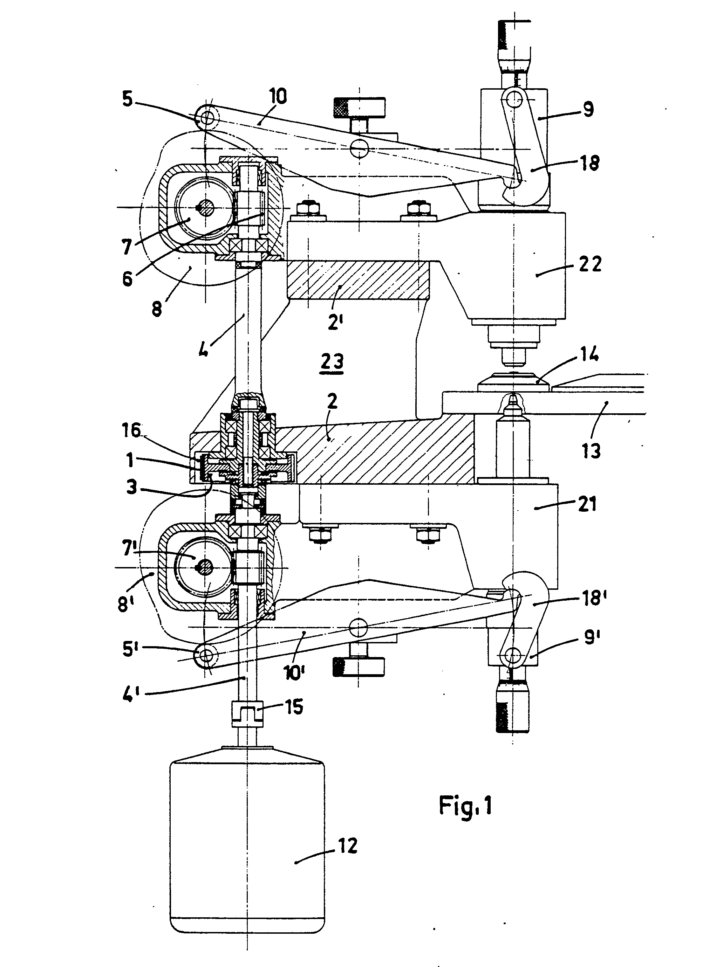

The support 2, 2' (Figure 1) consists of two sturdy rings connected to each other by spokes 23, spaced apart from each other so as to form a single support for the blocks 21 and 22 which carry the operating units 9 and 9'.

Since there are intervals between these spokes, there is easy access to the working positions.

As already said in the preamble, the revolving table according to the present invention differs notably from the prior art, in particular for the coaxial and opposed i.e. balanced arrangement of following pieces:

— the two shafts 4 and 4';

— the two worms 6 and 6' and worm wheels 7 and 7';

— the two cams 8 and 8' and rollers 5, 5';

— the four levers 10, 18 and 10', 18'.

Since all these pieces have the same respective masses, are driven at the same angular speeds and have the same clearances, they allow the perfect synchronism between the upper and lower work operations on the pieces to be worked, which increase the working speed.

Furthermore the remarkable compactness of the revolving table according to the present invention and its arrangement in the annular groove (16) in the support (2) (see claim 3) avoid all vibrations on working tools and on the pieces to be worked, allowing a great accuracy of work.

It is therefore possible to work, with said revolving table apparatus small pieces, i.e. ball pen points, electrical contacts etc., with a tolerance of only a few microns.

The machine according to the cited prior art, which do not have such a high compactness, nor compensation of the masses, or different clearances of the pieces controlling the different work units, cannot work with said accuracy.

## Claims

1. Revolving table apparatus for an automatic machine including a revolving table with a plurality of stations near its periphery and each having a pair of copper and lower operating units, comprising

— a plurality of toothed wheels (3), arranged around the revolving table (13), one toothed wheel for each station, a toothed chain, or the like (1), engaging all of said toothed wheels so as to drive them simultaneously and in synchronism through a coupling (15) from at least one motor (12);

— each toothed wheel (3) being in driving relationship with a mechanism for direct transmission of feed movements to the operating units, the mechanism comprising an upper shaft (4) which drives through speed reduction members (6, 7), an upper cam (8), an upper cam follower roller (5) carried by an upper lever (10, 18), which acts upon the upper operating unit (9) of said station to impart to it a feed movement and

— a lower shaft (4′) which drives, through speed reduction members (6′, 7′) a lower cam (8′), a lower cam follower roller (5′), carried by a lower lever (10′, 18′) acting upon the lower operating unit (9′) of that same station to impart to it a feed movement characterised in that the upper and lower shafts (4, 4′) are aligned and that the parts of the mechanism driving respectively by the upper and lower shafts are located symmetrically with respect to the plane of the revolving table.

2. Revolving table apparatus according to claim 1, characterized by the fact that said belt or chain or the like (1) is stretched by idling sprockets (11), arranged between one toothed wheel and the adjacent one, so as to increase the width of the angle of opening of the belt, toothed chain, or the like with respect to each above-mentioned toothed wheel.

3. Revolving table apparatus according to claim 1, characterized by the fact that the toothed wheels (3) are arranged in an annular groove (16) made in the underside of support (2) of the revolving table.

4. Revolving table apparatus according to claim 1, characterized by the fact that, for higher power, there are arranged several drive motors (12) coaxially with respect to as many lower shafts (4′), said motors, if asynchronous, being automatically synchronized with each other by the connection ·with said belt, chain, or the like thereof (1).

5. Revolving table apparatus according to claim 1, characterized by the fact that the control of the rotatable table (13) is also derived from the same motor or the same motors which control said toothed belt (1) or toothed chain or the like through corresponding speed reduction members.

6. Revolving table apparatus according to claim 1, characterized by the fact that said speed reduction members each are comprised by a worm (6, 6′) and a worm wheel (7, 7′).

7. Revolving table apparatus according to claim 1, characterized by the fact that said upper (9) and lower (9′) operating units are supported by two sturdy rings (2, 2′) interconnected by spokes (23), spaced apart from each other so as to form a single support for the operating unit (9 and 9′), allowing easy access to the working positions.

## Patentansprüche

1. Drehtischanlage für eine automatische Maschine, mit einem Drehtisch mit einer Vielzahl von Stationen in der Nähe seines Umfanges, wobei jede Station eine obere und eine untere Bearbeitungseinheit aufweist, die zusammen ein Paar bilden, mit einer Vielzahl Zahnräder (3), die rund um den Drehtisch (13) angeordnet sind, wobei jede Station ein Zahnrad aufweist, und eine gezahnte Kette oder dergleichen in alle Zahnräder eingreift zum gleichzeitigen und synchronen Antreiben der Zahnräder über eine Kupplung (15) durch mindestens einen Motor (12), wobei jedes Zahnrad (3) zur direkten übertragung von Vorschubbewegungen auf die Bearbeitungseinheiten mit einer Vorrichtung antriebsmäßig zusammenwirkt, die eine obere Welle (4), die über Geschwindigkeitsreduktionselemente (6, 7) eine obere Nockenscheibe (8) antreibt, eine obere Nockenstösselrolle (5), die durch einen oberen Hebel (10, 18) getragen wird, der zur Ausführung einer Vorschubbewegung auf die obere Bearbeitungseinheit (9) dieser Station wirkt, eine untere Welle (4′), die über Geschwindigkeitsreduktionselemente (6′, 7′) eine untere Nockenscheibe (8′) antreibt, und eine untere Nockenstösselrolle 5(5′) aufweist, die durch einen unteren Hebel (10′, 18′) getragen wird, der zur Ausführung einer Vorschubbewegung auf die untere Bearbeitungseinheit (9′) der gleichen Station wirkt, dadurch gekennzeichnet, daß die obere und die untere Welle (4, 4′) miteinander fluchten, und daß die Teile der Vorrichtung, die durch die entsprechende obere und untere Welle angetrieben werden, in bezug zur Ebene des Drehtisches symmetrisch angeordnet sind.

2. Drehtischanlage nach Anspruch 1, dadurch gekennzeichnet, daß der Zahnriemen, die Kette (1) oder dergleichen durch Leerlaufräder (11) gespannt ist, die zwischen benachbarten Zahnrädern zur Erhöhung der Breite des Öffnungswinkels des Riemens, der Zahnkette oder dergleichen in bezug zu jedem der Zahnräder angeordnet sind.

3. Drehtischanlage nach Anspruch 1, dadurch gekennzeichnet, daß die Zahnräder (3) in einer ringförmigen Rille (16) angeordnet sind, die in der Unterseite einer Abstützung (2) des Drehtisches vorgesehen ist.

4. Drehtischanlage nach Anspruch 1, dadurch gekennzeichnet, daß für höhere Leistungen verschiedene Antriebsmotoren vorgesehen sind, die entsprechend der Anzahl unterer Wellen zu den unteren Wellen (4') koaxial angeordnet sind, wobei die Motoren automatisch miteinander durch Verbindung mit dem Riemen, der Kette (1), oder dergleichen synchronisiert werden, wenn die Motoren Asynchronmotoren sind.

5. Drehtischanlage nach Anspruch 1, dadurch gekennzeichnet, daß die Steuerung des Drehtisches (13) ebenfalls durch den gleichen Motor oder die gleichen Motoren erreicht wird, der/die den Zahnriemen (1), die Zahnkette, oder dergleichen durch entsprechende Geschwindigkeitsreduktionselemente steuert bzw. steuern.

6. Drehtischanlage nach Anspruch 1, dadurch gekennzeichnet, daß jedes der Geschwindigkeitsreduktionselemente eine Schnecke (6, 6') und ein Schneckenrad (7, 7') aufweist.

7. Drehtischanlage nach Anspruch 1, dadurch gekennzeichnet, daß die oberen Bearbeitungseinheiten (9) und die unteren Bearbeitungseinheiten (9') durch zwei stabile Ringe (2, 2') getragen werden, die miteinander durch voneinander beabstandete Sprossen (23) verbunden sind, und die für die Bearbeitungseinheit (9, und 9') eine einteilige Abstützung bilden, die einen einfachen Zugang zu den Bearbeitungspositionen erlaubt.

**Revendications**

1. Appareil à table tournante pour une machine automatique comprenant une table tournante avec plusieurs postes voisins de sa périphérie ayant chacun deux unités de travail, l'une supérieure et l'autre inférieure, comprenant:

— plusieurs roues dentées (3) disposées sur le pourtour de la table tournante, une roue dentée pour chaque poste;
— une chaîne dentée ou une transmission analogue (1) engrenant avec toutes les roues dentées de façon à les entraîner simultanément et en synchronisme par un accouplement (15) à partir d'au moins un moteur (12);
— chaque roue dentée (3) étant en liaison d'entraînement avec un mécanisme pour la transmission directe des mouvements d'avance aux unités de travail, le mécanisme comprenant un arbre supérieur (4) qui entraîne par des éléments réducteurs de vitesse (6, 7) une came supérieure (8), un galet supérieur (5) actionné par came, porté par un levier supérieur (10, 18) qui agit sur l'unité de travail supérieure (9) dudit poste pour lui communiquer un mouvement d'avance et un arbre inférieur (4') qui entraîne par des éléments réducteurs de vitesse (6', 7') une came inférieure (8'), un galet inférieur (5) actionné par came, porté par un levier inférieur (10', 18') agissant sur l'unité de travail inférieur (9') de ce même poste pour lui communiquer un mouvement d'avance, caractérisé en ce que les arbres supérieur et inférieur (4, 4') sont en alignement et que les parties du mécanisme entraînées respectivement par les arbres superieur et inférieur sont placées symétriquement par rapport au plan de la table tournante.

2. Appareil à table tournante selon la revendication 1, caractérisé par le fait que ladite courroie, chaîne ou transmission analogue est tendue par des roues folles (11) disposées entre une roue dentée et la roue dentée voisine de façon à augmenter la largeur de l'angle d'ouverture de la courroie, de la chaîne dentée ou de la transmission analogue par rapport à chaque roue dentée mentionnée ci-dessus.

3. Appareil à table tournante selon la revendication 1, caractérisé par le fait que les roues dentées (3) sont disposées dans une gorge annulaire (16) ménagée dans le dessous du support (2) de la table tournante.

4. Appareil à table tournante selon la revendication 1, caractérisé en ce que, pour une puissance augmentée, on dispose plusieurs moteurs d'entraînement (12) coaxialement par rapport à autant d'arbres inférieurs (4'), lesdits moteurs s'ils sont synchronisés, étant automatiquement synchronisés mutuellement par la liaison avec ladite courroie, ladite chaîne ou ladite transmission équivalente (1).

5. Appareil à table tournante selon la revendication 1, caractérisé en ce que la commande de la table tournante (13) est prélevée aussi du même moteur ou des mêmes moteurs qui commandent ladite courroie dentée, ladite chaîne dentée ou ladite transmission équivalente par l'intermédiaire d'éléments réducteurs de vitesse correspondante.

6. Appareil à table tournante selon la revendication 1, caractérisé en ce que chacun desdits éléments réducteurs de vitesse est constitué par une vis sans fin (6, 6') et une roue à vis sans fin (7, 7').

7. Appareil à table tournante selon la revendication 1, caractérisé en ce que lesdites unités de travail supérieures (9) et inférieures (9') sont supportées par deux anneaux robustes (2, 2') reliés entre eux par des rayons (23), écartés l'un de l'autre de façon à former un seul support pour les unités de travail (9 et 9') en permettant un accès facile aux positions de travail.

Fig. 1

Fig. 2